# EUROPEAN PATENT SPECIFICATION

(11) **EP 3 872 378 B1**
(45) Date of publication and mention of the grant of the patent: **08.11.2023**
(21) Application number: 20883667.6
(22) Date of filing: 03.09.2020
(51) Int. Cl.: F16K 11/08, F16K 31/04, F16K 11/078, F16K 31/52, F16K 11/074, F16K 31/524, F16K 31/53

(54) **FLUID NON-CROSSOVER SWITCHING VALVE**
FLUIDUMSCHALTVENTIL OHNE ÜBERKREUZUNG
SOUPAPE DE COMMUTATION DE NON-CROISEMENT DE FLUIDE

(30) Priority: 25.12.2019 CN 201911359137
(43) Date of publication of application: 01.09.2021
(73) Proprietor: Nanjing Runze Fluid Control Equipment Co., Ltd, Nanjing, Jiangsu 211100 (CN)
(72) Inventor: REN, Dapeng, Nanjing, Jiangsu 211100 (CN)
(74) Representative: Murgitroyd & Company
(86) International application number: PCT/CN2020/113169
(87) International publication number: WO 2021/128928

(56) References cited:
- WO-A1-2015/062830
- CN-A- 110 886 873
- CN-A- 110 925 450
- CN-A- 110 925 474
- CN-U- 204 852 471
- CN-U- 204 852 471
- CN-U- 211 202 968
- JP-A- H11 153 238
- US-A1- 2016 201 827

## Description

### TECHNICAL FIELD

The present invention relates to the technical field of fluid control devices, and in particular to a cross-contamination-free fluid switching valve.

### BACKGROUND

Gastight syringe is widely used in many fields such as medical drug analysis, environmental monitoring, inspection and quarantine. In the case of a wide variety of samples or reagents to be analyzed, the gastight syringe is usually used in conjunction with the switching valve. However, the existing switching valve often contacts the non-target port in the process of switching to the target port, such that the fluid remaining at the non-target port is more likely to contact the sample to be tested, causing sample contamination and further affecting the accuracy of test analysis. WO2015/062830A relates to the cleaning of rotary valves and discloses a rotary valve comprising a stator and a rotor generally in rotary sliding engagement with the said stator about a valve axis RA.

### SUMMARY

Based on this, it is necessary to provide a cross-contamination-free fluid switching valve capable of avoiding cross-contamination due to fluids from other inlets when the inlet is switched.

The cross-contamination-free fluid switching valve is invented to solve the technical problem thereof as follows. First, the cross-contamination-free fluid switching valve is composed of the valve body, the first drive assembly and the second drive assembly. The valve body comprises valve head, valve-core seat and rotor valve-core. The valve-core seat is rotatable relative to the valve head. The rotor valve-core can be mounted on the valve-core seat slidably. The valve-core seat is provided with a sliding chute, the rotor valve-core is connected to the sliding chute slidably, an end surface, away from the valve head, of the rotor valve-core is provided with a guide groove, a length direction of the guide groove is perpendicular to a length direction of the sliding. The rotor valve-core abuts to the valve head which is provided with at least three switching ports. The rotor valve-core is provided with a groove, which is applied to connect the switching ports on the plane where the rotor valve-core and the valve head fit on. The first drive assembly is configured to drive the valve-core seat to rotate, and the second drive assembly is configured to drive the rotor valve-core to slide.

Further, the valve body further includes an eccentric shaft which can be inserted into the valve-core seat rotatably. One end of the eccentric shaft can be accommodated in the guide groove movably.

Further, the eccentric shaft comprises a drive shaft and a connecting strut, the raised of which is located in the end of the drive shaft. The central axis of the connecting strut is offset from the central axis of the drive shaft. A bearing is mounted on the connecting strut, which is accommodated in the guide groove.

Further, the length direction of the sliding chute is arranged along the radial direction of the valve-core seat, and parallel to the length direction of the groove which is also arranged along the radial direction of the valve-core seat.

Further, the valve body further includes a rotor wear-resistant member which is fitted in the sliding chute, and the rotor valve-core abuts on the rotor wear-resistant member.

Further, the switching ports are evenly distributed along a circumference of the valve head. The center of the valve head is the common port along an axial direction of the valve head for fluid to flow in, and the common port can be communicated with the groove.

Further, the valve body further includes a valve base. The valve head is installed at one end of the valve base. The valve base is arranged to cover an outer side of the valve-core seat, which is rotatable relative to the valve base.

Further, the valve body further includes a plane bearing and an elastic component. The valve-core seat is formed with an abutting surface. The plane bearing is sheathed on the valve-core seat. The elastic component is arranged between the plane bearing and the abutting surface flexibly, and an end surface of the plane bearing contacts the inner wall of one end of the valve base.

Further, the cross-contamination-free fluid switching valve further includes a housing. The valve body is mounted on one end of the housing, and both the first drive assembly and the second drive assembly are mounted in the housing.

Further, the first drive assembly comprises a drive motor and a deceleration mechanism. The first drive motor is connected to a power input end of the first deceleration mechanism. A power output end of the first deceleration mechanism is connected to the valve-core seat. The second drive assembly includes a second drive motor and a second deceleration mechanism. The second drive motor is connected to a power output end of the second deceleration mechanism. The power output end of the second deceleration mechanism is rotatably connected to the eccentric shaft through the first drive assembly.

The present invention has the following advantages. In the cross-contamination-free fluid switching valve system, the communication relationship between the groove and the port currently in use can be disconnected by sliding the rotor valve-core . In the same way, the groove can be reconnected with the target port by sliding the rotor valve-core. In this way, the fluid contamination caused by intersecting with other non-target ports is avoided during the process of switching to the target port.

### BRIEF DESCRIPTION OF THE DRAWINGS

The present invention will be further explained below based on the drawings and embodiments.
FIG. 1 is a perspective view of a cross-contamination-free fluid switching valve of the present invention;
FIG. 2 is another perspective view of the cross-contamination-free fluid switching valve shown in FIG. 1 (the housing is omitted);
FIG. 3 is a partially exploded view of a valve body in the cross-contamination-free fluid switching valve shown in FIG. 1;
FIG. 4 is a partially exploded view from another perspective of the valve body in the cross-contamination-free fluid switching valve shown in FIG. 1;
FIG. 5 is a perspective view of a drive shaft in the valve body shown in FIG. 3;
FIG. 6 is a schematic diagram of a connection structure of the drive shaft and a rotor valve-core in the valve body shown in FIG. 3;
FIG. 7 is an exploded view of the first drive mechanism in the cross-contamination-free fluid switching valve shown in FIG. 2;
FIG. 8 is a partially exploded view of the second drive mechanism in the cross-contamination-free fluid switching valve shown in FIG. 2 (the connecting shaft is omitted); and
FIG. 9 is a cross-sectional view of the cross-contamination-free fluid switching valve shown in FIG. 1.

The names and corresponding numerals of components in the drawings are as follows:

| | | |
|---|---|---|
| Housing 10; | Valve body 20; | Valve head 21; |
| Switching port 211; | Common port 212; | Valve-core seat 22; |
| Sliding chute 221; | Base 222; | Connecting rod 223; |
| Rotor valve-core 23; | Groove 231; | Guide groove 232; |
| Stator 24; | Rotor wear-resistant member25; | Drive shaft 26; |
| Connecting strut 261; | Bearing 262; | Valve-core bearing 263; |
| Valve base 27; | Bolt 271; | Seals 272; |
| Plane bearing 28; | Elastic component29; | First drive assembly 30; |
| First drive motor 31; | First deceleration mechanism 32; | First gearbox 321; |
| First ring gear 322; | First master planet gear 323; | First master planet carrier 324; |
| First secondary planet gear 325; | First secondary planet carrier 326; | |
| Second drive assembly 40; | Second drive motor 41; | |
| Second deceleration mechanism 42; | Second gearbox 421; | |
| Second ring gear 422; S | econd master planet gear 423; | Second master planet carrier 424; |
| Second secondary planet gear 425; | Second secondary planet carrier 426; | Connecting shaft 427. |

### DETAILED DESCRIPTION OF THE EMBODIMENTS

The present invention will now be described in detail based on the drawings. The drawings are simplified schematic diagrams, and only schematically illustrate the basic structure of the present invention, thus they only show the configurations related to the present invention.

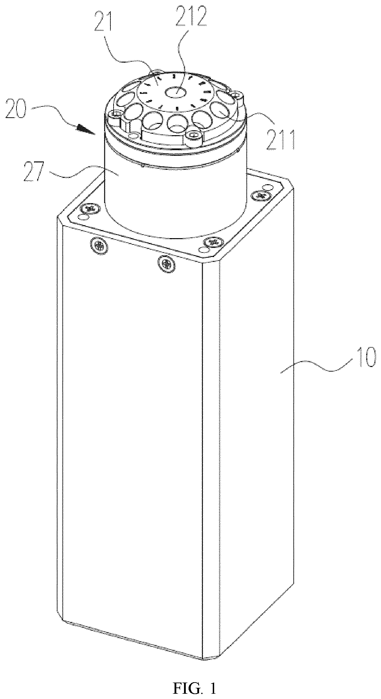

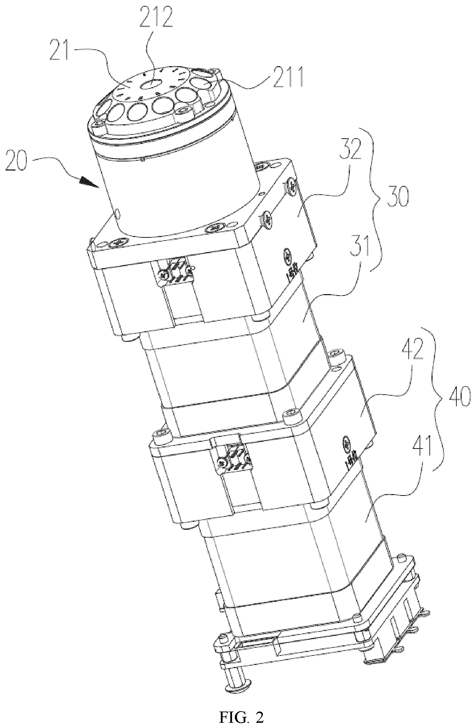

Referring to FIGS. 1 to 2, the present invention provides a cross-contamination-free fluid switching valve for switching fluid flow channels and controlling fluid flow rate. The cross-contamination-free fluid switching valve is composed of a housing 10, a valve body 20 mounted on one end of the housing 10, a first drive assembly 30 and a second drive assembly 40 which are installed inside the housing 10. The fluid may be liquid or gas, and may also be a gas-liquid mixture, which is not limited herein.

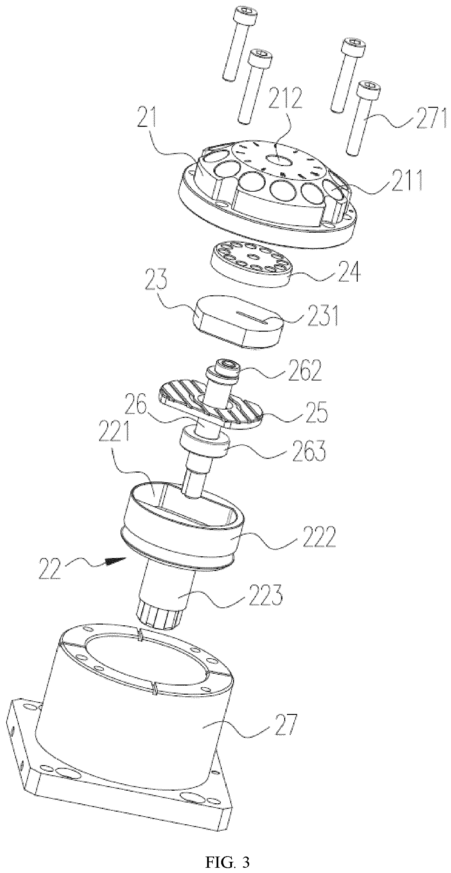

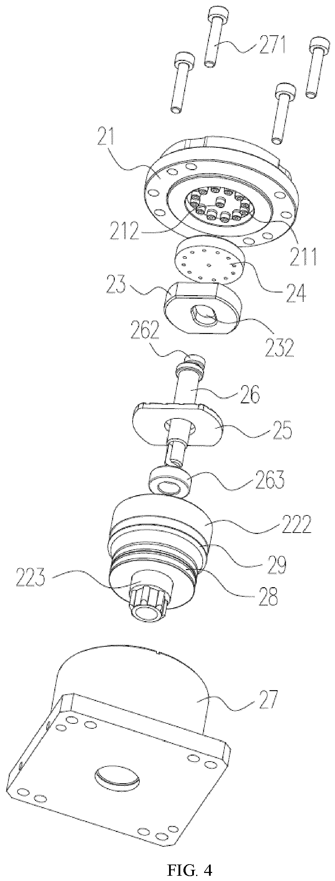

Referring to FIGS. 3 to 4, the valve body 20 comprises a valve head 21, a valve-core seat 22 rotatable relative to the valve head 21, and a rotor valve-core 23 that can be mounted on the valve-core seat slidably 22. The valve head 21 is provided with multiple switching port.21 1, and the rotor valve-core 23 is provided with a groove 231. When in use, rotating the valve-core seat 22, relative to the valve head 21, can drive the rotor valve-core 23 to rotate together so that the groove 231 can be in communication with any switching port 211, thereby realizing the function of switching fluid flow channels. Sliding the rotor valve-core 23 can change a communication area of the groove 231 and the switching port 211, thereby realizing the function of controlling the fluid flow rate. Therefore, the cross-contamination-free fluid switching valve system has good versatility which can be used in various area, such as scientific experiment, sample testing and other applications.

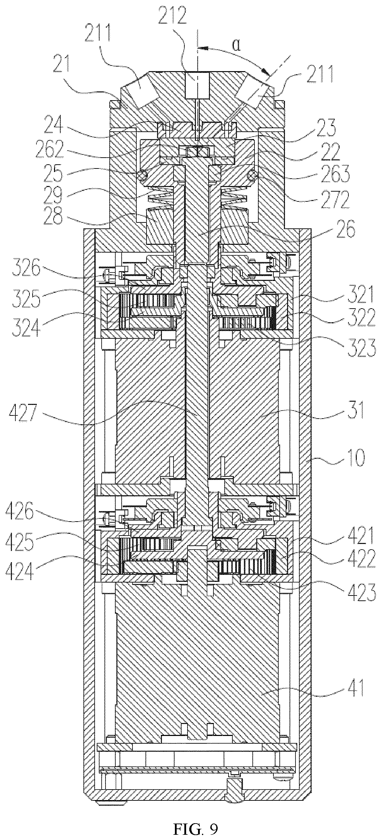

The valve head 21 has a substantially cylindrical structure. The common port 212 is arranged at the center of the valve head 21 along an axial direction of the valve head 21. Multiple switching ports 211 are evenly distributed 21 along a circumference of the valve head 21. Both switching ports 211 and the common port 212 pass through the opposite ends of the valve head 21. The opening of the common port 212 is equidistant from the opening of each switching port 211, wherein the opening of the common port 212 and the opening of each switching port 211 both pass through the end surface of the valve head near the valve-core seat. When in use, the fluid flows into the common port 212, and then flows through the groove 231 finally exits via switching port 211. In addition, referring to FIG. 9, each of the switching port 211 is inclined, so an inclined angle α is formed between the central axis of the switching port 211 and the central axis of the common port 212, where 30°≤α≤60°, in the present embodiment α=45°.

The valve-core seat 22 has a substantially cylindrical structure. The end surface of the valve-core seat 22 near the valve head 21 is provided with the sliding chute 221 which appears as an obround structure. The length direction of the sliding chutes 221 is arranged along a radial direction of the valve-core seat 22. The rotor valve-core 23, matched with the sliding chute 221, also has an obround structure . The length of the rotor valve-core 23 is shorter than that of the sliding chute 221 so that the rotor valve-core 23 can slide along the length direction of the sliding chute 221 but cannot rotate relative to the valve-core seat 22. The groove 231 is located on the end surface of the rotor valve-core 23 near the valve head 21. The length direction of the groove 231 is parallel to the length direction of the sliding chute 221, but arranged along the radial direction of the valve-core seat 22.

In a specific embodiment, the valve body 20 also includes a stator 24 and a rotor wear-resistant member 25. The stator 24 has a disk-like structure and is detachably fixed to one end of the valve head 21. The rotor valve-core 23 and the stator 24 are fitted to form a fitting plane, and the rotor valve-core 23 is rotatable relative to the stator 24. The stator 24 is provided with through-holes corresponding to the switching ports 211 and the common port 212, and then the through-holes are communicated with the corresponding switching ports 211 or the common port 212. That is, the switching ports 211 and the common port 212 both pass through the fitting plane. When in use, the groove 231 communicates with the switching ports 211 and the common port 212 via the through-holes on the stator 24. The rotor wear-resistant member 25 appears as an obround structure, fitted in the sliding chute 221. The rotor valve-core 23 abuts on the rotor wear-resistant member 25, and is rotatable relative to the rotor wear-resistant member 25. Both the stator 24 and the rotor wear-resistant member25 are made of a wear-resistant material, which prevents both of them from being seriously worn when the rotor valve-core 23 is working, ensures the tightness of the fluid and prevents leakage. In the present embodiment, both the stator 24 and the rotor wear-resistant member 25 are made of sapphire. Since the stator 24 is mounted on the valve head 21, it is only necessary to ensure that the stator 24 has better wear resistance, which can effectively reduce the production cost of the valve head 21. In addition, when the stator 24 is seriously worn, it is only necessary to change the stator 24, which further reduces the production cost. Further, the fitting surface of the stator 24 and the rotor valve-core 23 is a plane surface, which is easier to be machined than a spherical contact surface, and can ensure a close fit between the stator 24 and the rotor valve-core 23, which prevents fluid leakage during the direction switching process of fluid.

In addition, the fitting plane between the stator 24 and the rotor valve-core 23 is located between two opposite end surfaces of the valve head 21 and the valve-core seat 22, that is, a lower end surface of the stator 24 protrudes on a lower end surface of the valve head 21 and an upper end surface of the rotor valve-core 23 protrudes on an upper end surface of the valve-core seat 22 , in this way, the stator 24 and the rotor valve-core 23 are always in contact with each other to ensure the sufficient fitting, which substantially improves the sealing performance. In other embodiments not shown herein, both the stator 24 and the rotor wear-resistant member 25 may be omitted, in which case both end surfaces of the rotor valve-core 23 are fitted with the end surface of the valve head 21 and the groove bottom wall of the sliding chute 221, respectively.

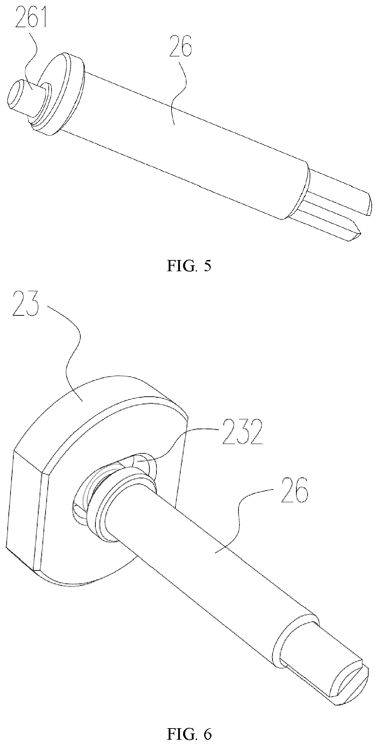

Referring to FIGS. 5 and 6, in a specific embodiment, the valve body 20 further includes a drive shaft 26. The drive shaft 26 is rotatably inserted in the valve-core seat 22. The central axis of the drive shaft 26 is disposed coaxially with the central axis of the valve-core seat 22, and one end of the drive shaft 26 extends into the sliding chute 221. Further, the guide groove 232 is provided on the end surface of the rotor valve-core 23 away from the valve head 21. The guide groove 232 has an obround structure, and the length direction of the guide groove 232 is perpendicular to the length direction of the sliding chute 221. The connecting strut 261 protrudes at the end part of the drive shaft 26 along the axial direction of the drive shaft 26. The central axis of the connecting strut 261 is offset from the central axis of the drive shaft 26. The bearing 262 is mounted on the connecting strut 261, which is accommodated in the guide groove 232 movably. The drive shaft 26 and the connecting strut 261 constitute an eccentric shaft together.

In order to ensure smooth rotation of the drive shaft 26 with respect to the valve-core seat 22, the valve-core bearing 263 is mounted between the drive shaft 26 and the valve-core seat 22.

In use, the drive shaft 26 rotates relative to the valve-core seat 22 to drive the bearing 262 to rotate around the central axis of the drive shaft 26. When the bearing 262 rotates to contact either of two closer opposite walls of the guide groove 232, the bearing 262 pushes the rotor valve-core 23 to slide along the length direction of the sliding chute 221, thereby adjusting the radial position of the groove 231. When the valve-core seat 22 is rotated, the rotor valve-core 23 is driven to rotate together, thereby adjusting a circumferential position of the groove 231.

In the present embodiment, the bearing 262 is mounted on the connecting strut 261. When the rotor valve-core 23 slides along the sliding chute 221 under the pushing effect of the bearing 262, the outer ring of the bearing 262 rolls on the wall of the guide groove 232, which reducing the friction between the connecting strut 261 and the rotor valve-core 23 and facilitating the movement of pushing the rotor valve-core 23. Understandably, In other embodiments not shown herein, the bearing 262 may also be omitted, such that the rotor valve-core 23 is slid by pushing the connecting strut 261 against the wall of the guide groove 232.

In a specific embodiment, the valve body 20 further includes a valve base 27 in a substantially sleeve-like structure with two open ends. The valve head 21 is fixed on one end of the valve base 27. The valve base 27 is arranged to cover the outer side of the valve-core seat 22, and the valve-core seat 22 is rotatable relative to the valve base27. The other end of the valve base 27 is fixedly connected to the housing 10. The valve head 21 and the valve base 27 are fastened by the bolt 271 . The seal 272 is sandwiched between the outer wall of the valve-core seat 22 and the inner wall of the valve base 27 to improve the sealing performance. The seal 272 is made of a sealing material such as silica gel or rubber and the like.

In a specific embodiment, the valve body 20 further includes the plane bearing 28 and the elastic component 29, both of which are accommodated inside the valve base 27. Specifically, the valve-core seat 22 is composed of the base 222 and the connecting rod 223 that connected to each other. The base 222 and the connecting rod 223 both appear as cylindrical structures, and the diameter of the base 222 is larger than that of the connecting rod 223. The sliding chute 221 is provided on the end surface of the base 222 away from the connecting rod 223. The end surface of the base 222 opposite to the sliding chute 221 forms an abutting surface (not shown in the drawings). The plane bearing 28 is sheathed on the connecting rod 223. The elastic component 29 is arranged between the plane bearing 28 and the abutting surface flexibly such that one end of the elastic component 29 can contact the plane bearing 28 elastically, and the other end of the elastic component 29 abuts on end surface of the plane bearing 28 elastically. Thereby, the other end surface of the plane bearing 28 contacts the inner wall of one end of the valve base 27 under the elastic effect of the elastic component 29. When installed in place, the elastic component 29 is compressed, and the elastic force acts on the valve-core seat 22, so that the abutting surface of the rotor valve-core 23 and the stator 24 are closely attached to each other, to further play a sealing role. At the same time, the plane bearing 28 is disposed to ensure that the valve-core seat 22 can rotate smoothly relative to the valve base 27.

In the present embodiment, the elastic component 29 is a belleville spring and sheathed on the connecting rod 223. It will be noted that the elastic component 29 may also be a rigid and elastic element such as a stainless steel spring piece or a copper spring piece, which is not limited here.

In a specific embodiment, there are twelve switching ports 211. If we want to switch the port, currently communicating with the groove 231, to the target port 211 without crossing other non-target ports 211 between the above two ports 211, firstly, slide the rotor valve-core 23 to disconnect the groove 231 from the communicating port 211, and then rotate the valve-core seat 22 to make the groove 231 correspond to the target port 211, finally, slide the rotor valve-core 23 again to communicate the groove 231 with the target port 211, which avoids the fluid contamination caused by the intersection between the non-target ports 211 and the groove 231 during the switching process, that is , cross-contamination-free. In addition, the communication area between the groove 231 and the switching ports 211 can be controlled by adjusting the sliding distance of the rotor valve-core 23 along the sliding chute 221 , then achieve the purpose of controlling the fluid flow rate. In order to achieve the reversing function of the switching ports 211, there are at least three ports 211.

In this embodiment, the groove 231 is in communication with only one port 211 at a time. In other embodiments not shown herein, the groove 231 may also simultaneously communicate with several ports 211 at a time, and the multiple ports 211 communicating with the groove 231 may be adjacent to each other or separated by other switching ports 211. The specific communication situations are determined by the shape of the groove 231, which is not limited herein.

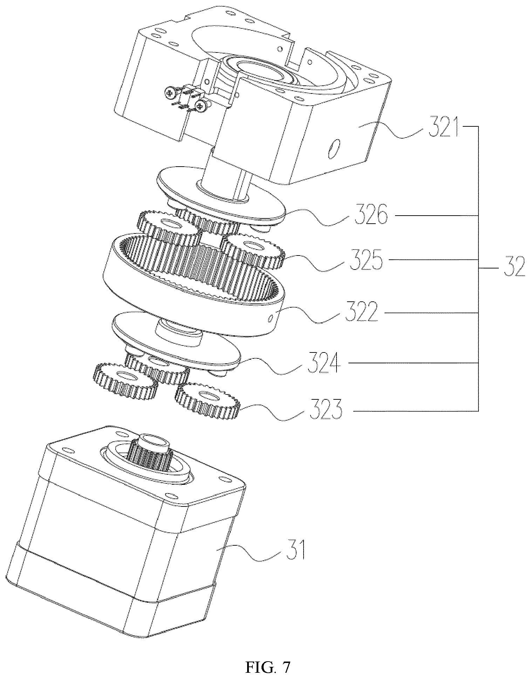

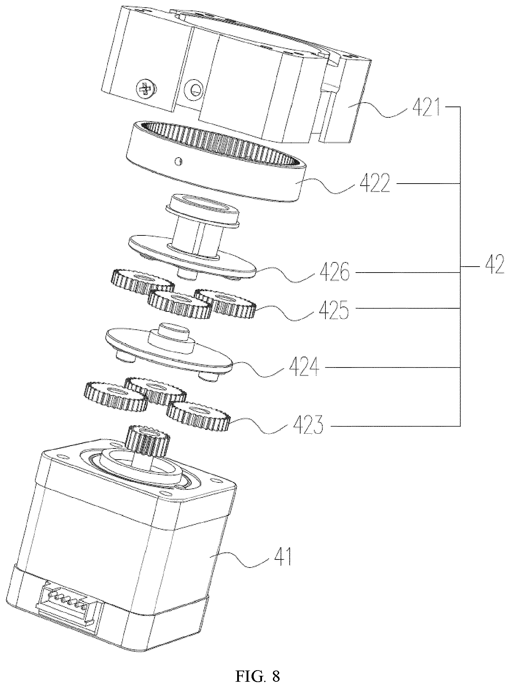

Referring to FIGS. 7-9, the first drive assembly 30 is configured to drive the valve-core seat 22 to rotate relative to the valve head 21, and the second drive assembly 40 is configured to drive the rotor valve-core 23 to slide relative to the valve-core seat 22.

The first drive assembly 30 comprises a first drive motor 31 and a first deceleration mechanism 32. The first deceleration mechanism 32 is composed of a first gearbox 321, a first ring gear 322, a first master planet gear 323, a first master planet carrier 324, a first secondary planet gear 325 and a first secondary planet carrier 326. The first gearbox 321 is fixed in the housing 10. The first ring gear 322 is fixed in the first gearbox 321. The first master planet gear 323 is arranged on the first master planet carrier 324, and the first master planet gear 323 is located between the first ring gear 322 and the output shaft of the first drive motor 31. The first master planet gear 323 is engaged with the first ring gear 322 and a gear sheathed on the output shaft of the first drive motor 31. The first secondary planet gear 325 is mounted on the first secondary planet carrier 326 and is located between the first ring gear 322 and the central shaft of the first secondary planet carrier 326. The first secondary planet gear 325 is engaged with the first ring gear 322 and the gear sheathed on the central shaft of the first secondary planet carrier 326. The central shaft of the first secondary planet carrier 326 is connected with the valve-core seat 22. Specifically, the central shaft of the first secondary planet carrier 326 is sheathed on the connecting rod 223, and the first secondary planet carrier 326 is embedded and connected with the connecting rod 223 slidably, that is, the first secondary planet carrier 326 can drive the connecting rod 223 to rotate, and the connecting rod 223 can slide in the axial direction of the valve-core seat 22 relative to the first secondary planet carrier 326. In this way, when the stator 24 is worn, the valve-core seat 22 can move axially under the elastic force of the elastic component 29 such that the stator 24 and the rotor valve-core 23 can closely fit.

During operation, the first drive motor 31 rotates to drive the first master planet gear 323 to rotate, thereby driving the first master planet carrier 324 to rotate. The first secondary planet gear 325 is driven by the first master planet carrier 324 to rotates, thereby driving the first secondary planet carrier 326 to rotate, and further driving the valve-core seat 22 to rotate, which achieves the effect of two-stage deceleration. That is, the first master planet gear 323 serves as a power input of the first drive assembly 30 and the first secondary planet carrier 326 serves as a power output of the first drive assembly 30.

The second drive assembly 40 is located at one side of the first drive assembly 30, far away from the valve body 20, The second drive assembly 40 comprises a second drive motor 41 and a second deceleration mechanism 42. The second deceleration mechanism 42 is composed of a second gearbox 421, a second ring gear 422, a second master planet gear 423, a second master planet carrier 424, a second secondary planet gear 425 and a second secondary planet carrier 426. The second gearbox 421 is fixed in the housing 10. The second ring gear 422 is fixed in the second gearbox 421. The second master planet gear 423 is arranged on the second master planet carrier 424 and located between the second ring gear 422 and the output shaft of the second drive motor 422. The second master planet gear 423 is engaged with the second ring gear 422 and a gear sheathed on the output shaft of the second drive motor 41. The second secondary planet gear 425 is mounted on the second secondary planet carrier 426. The second secondary planet gear 425 is engaged with the second ring gear 422 and the gear outside the central shaft of the second secondary planet carrier 426. The central shaft of the second secondary planet carrier 426 is connected to the connecting shaft 427. The connecting shaft 427 can penetrate the first drive assembly 30 rotatably and then connect to the drive shaft 26. In addition, in order to cooperate with the valve-core seat 22 to move axially, the connecting shaft 427 is also embedded and connected to the drive shaft 26 slidably. That is, the connecting shaft 427 can drive the drive shaft 26 to rotate, and the drive shaft 26 can move axially relative to the connecting shaft 427.

During operation, the second drive motor 41 rotates to drive the second master planet gear 423 to rotate, thereby driving the second master planet carrier 424 to rotate. The second secondary planet gear 425 is driven by the second master planet carrier 424 to rotate, thereby driving the second secondary planet carrier 426 to rotate. Further, the drive shaft 26 is driven by the connecting shaft 427 to rotate, finally causing the rotor valve-core 23 to slide, which achieves the effect of two-stage deceleration. That is, the second master planet gear 423 serves as a power input of the second drive assembly 40 and the connecting shaft 427 serves as a power output of the second drive assembly 40.

In other embodiments not shown herein, the first drive assembly 30 that drives the valve-core seat 22 to rotate may also be a gear drive assembly. Specifically, the gear drive assembly includes gears arranged at one side of the valve-core seat 22 and engaged with the outer peripheral surface of the valve-core seat 22. Optionally, the first drive assembly 30 may also be a belt drive assembly including a belt. The belt is arranged to cover the outer side of the valve-core seat 22 for driving the valve-core seat 22 to rotate. In addition, the second drive assembly 40 for driving the rotor valve-core 23 to slide may also be realized by means of a cylinder, in particular, the cylinder is mounted on the valve-core seat 22, and the rotor valve-core 23 is connected to a protruding end of the cylinder, such that the reciprocation of the cylinder drives the rotor valve-core 23 to slide.

The cross-contamination-free fluid switching valve provided by the invention can switch the fluid flow channels by rotating the valve-core seat 22 relative to the valve head 21, and can realize the function of controlling fluid flow rate by sliding the rotor valve-core 23 relative to the valve-core seat 22. The valve-core seat 22 and the rotor valve-core 23 can jointly operate to realize the cross-contamination-free switching and communication function which has a compact structure, and avoid fluid cross-contamination.

## Claims

1. A cross-contamination-free fluid switching valve, **characterized in that**, the cross-contamination-free fluid switching valve includes a valve body (20), a first drive assembly (30) and a second drive assembly (40) , wherein the valve body (20) is composed of a valve head (21), a valve-core seat (22) and a rotor valve-core (23), the valve-core seat (22) is rotatable relative to the valve head (21), the rotor valve-core (23) is mounted on the valve-core seat (22) slidably, the valve-core seat (22) is provided with a sliding chute (221), the rotor valve-core (23) is connected to the sliding chute (221) slidably, an end surface, away from the valve head (21), of the rotor valve-core (23) is provided with a guide groove (232), a length direction of the guide groove (232) is perpendicular to a length direction of the sliding, the rotor valve-core (23) is fitted with the valve head (21) that is provided with at least three switching ports (211), the rotor valve-core (23) is provided with a groove (231), which is able to be in communication with the port (211) on a fitting plane between the rotor valve-core (23) and the valve head (21), the first drive assembly (30) is configured to drive the valve-core seat (22) to rotate, and the second drive assembly (40) is configured to drive the rotor valve-core (23) to slide.

2. The cross-contamination-free fluid switching valve of claim 1, **characterized in that**, the valve body (20) further includes an eccentric shaft, which is inserted into the valve-core seat (22) rotatably, and one end of the eccentric shaft is accommodated in the guide groove (232) movably.

3. The cross-contamination-free fluid switching valve of claim 2, **characterized in that**, the eccentric shaft is a drive shaft (26) and a connecting strut (261), which protrudes from an end portion of the drive shaft (26), a central axis of the connecting strut (261) is offset from a central axis of the drive shaft (26), a bearing is mounted on the connecting strut (261), and the bearing is accommodated in the guide groove (232).

4. The cross-contamination-free fluid switching valve of claim 2, **characterized in that**, the length direction of the sliding chute (221) is arranged along a radial direction of the valve-core seat (22), a length direction of the groove (231) is parallel to the length direction of the sliding chute (221), and the groove (231) is arranged along the radial direction of the valve-core seat (22).

5. The cross-contamination-free fluid switching valve of claim 2, **characterized in that**, the valve body (20) further includes a rotor wear-resistant member (25), which is mounted in the sliding chute (221) cooperatively, and the rotor valve-core (23) abuts on the rotor wear-resistant member (25).

6. The cross-contamination-free fluid switching valve of claim 1, **characterized in that**, the switching ports (211) are distributed evenly along a circumference of the valve head (21), a center of the valve head (21) is provided with a common port (212) along an axial direction of the valve head (21) for inflowing fluid, and the common port (212) is in communication with the groove (231).

7. The cross-contamination-free fluid switching valve of claim 2, **characterized in that**, the valve body (21) further includes a valve base (27), the valve head (21) is mounted on one end of the valve base (27), which is sheathed on the valve-core seat (22), and the valve-core seat (22) is rotatable relative to the valve base (27).

8. The cross-contamination-free fluid switching valve of claim 7, **characterized in that**, the valve body (21) further includes a plane bearing (28) and an elastic component (29), an abutting surface is formed on the valve-core seat (22), the plane bearing (28) is sheathed on the valve-core seat (22), the elastic component (29) is arranged between the plane bearing (28) and the abutting surface flexibly, and one end surface of the plane bearing (28) abuts against an inner wall of one end of the valve base (27).

9. The cross-contamination-free fluid switching valve of claim 2, **characterized in that**, the cross-contamination-free fluid switching valve further includes a housing (10), the valve body (20) is mounted on one end of the housing (10), and both the first drive assembly (30) and the second drive assembly (40) are mounted in the housing (10).

10. The cross-contamination-free fluid switching valve of claim 9, **characterized in that**, the first drive assembly (30) a first drive motor (31) and a first deceleration mechanism (32), the first drive motor (31) is connected to a power input terminal of the first deceleration mechanism (32), a power output terminal of the first deceleration mechanism (32) is connected to the valve-core seat (22), the second drive assembly (40) a second drive motor (41) and a second deceleration mechanism (42), the second drive motor (41) is connected to a power output terminal of the second deceleration mechanism (42), and the power output terminal of the second deceleration mechanism (42) is rotatably connected to the eccentric shaft through the first drive assembly (30).

## Patentansprüche

1. Ein kreuzkontaminationsfreies Fluidschaltventil, **dadurch gekennzeichnet, dass** das kreuzkontaminationsfreie Fluidschaltventil einen Ventilkörper (20), eine erste Antriebsbaugruppe (30) und eine zweite Antriebsbaugruppe (40) umfasst, wobei der Ventilkörper (20) aus einem Ventilkopf (21), einem Ventileinsatzsitz (22) und einem Rotorventileinsatz (23) besteht, der Ventileinsatzsitz (22) relativ zu dem Ventilkopf (21) drehbar ist, der Rotorventileinsatz (23) gleitend auf dem Ventileinsatzsitz (22) angebracht ist, der Ventileinsatzsitz (22) mit einem Gleitschacht (221) versehen ist, der Rotorventileinsatz (23) gleitend mit dem Gleitschacht (221) verbunden ist, eine Endfläche, abseitig von dem Ventilkopf (21), des Rotorventileinsatzes (23) mit einer Führungsnut (232) versehen ist, eine Längsrichtung der Führungsnut (232) senkrecht zu einer Längsrichtung des Gleitens ist, der Rotorventileinsatz (23) an dem Ventilkopf (21), der mit mindestens drei Schaltöffnungen (211) versehen ist, eingepasst ist, der Rotorventileinsatz (23) mit einem Schlitz (231) versehen ist, der mit der Öffnung (211) auf einer Passungsebene zwischen dem Rotorventileinsatz (23) und dem Ventilkopf (21) in Kommunikationsverbindung stehen kann, die erste Antriebsbaugruppe (30) konfiguriert ist, um den Ventileinsatzsitz (22) zum Drehen anzutreiben, und die zweite Antriebsbaugruppe (40) konfiguriert ist, um den Rotorventileinsatz (23) zum Gleiten anzutreiben.

2. Kreuzkontaminationsfreies Fluidschaltventil gemäß Anspruch 1, **dadurch gekennzeichnet, dass** der Ventilkörper (20) ferner eine Exzenterwelle umfasst, die drehbar in den Ventileinsatzsitz (22) eingesetzt ist, und ein Ende der Exzenterwelle beweglich in der Führungsnut (232) aufgenommen ist.

3. Kreuzkontaminationsfreies Fluidschaltventil gemäß Anspruch 2, **dadurch gekennzeichnet, dass** die Exzenterwelle eine Antriebswelle (26) und eine Verbindungsstrebe (261), die aus einem Endabschnitt der Antriebswelle (26) herausragt, ist, eine Mittelachse der Verbindungsstrebe (261) zu einer Mittelachse der Antriebswelle (26) versetzt ist, ein Lager an der Verbindungsstrebe (261) angebracht ist und das Lager in der Führungsnut (232) aufgenommen wird.

4. Kreuzkontaminationsfreies Fluidschaltventil gemäß Anspruch 2, **dadurch gekennzeichnet, dass** die Längsrichtung des Gleitschachts (221) entlang einer radialen Richtung des Ventileinsatzsitzes (22) angeordnet ist, eine Längsrichtung des Schlitzes (231) parallel zur Längsrichtung des Gleitschachts (221) ist und der Schlitz (231) entlang der radialen Richtung des Ventileinsatzsitzes (22) angeordnet ist.

5. Kreuzkontaminationsfreies Fluidschaltventil gemäß Anspruch 2, **dadurch gekennzeichnet, dass** der Ventilkörper (20) ferner ein verschleißfestes Rotorelement (25) umfasst, das zusammenwirkend in dem Gleitschacht (221) angebracht ist, und der Rotorventileinsatz (23) an dem verschleißfesten Rotorelement (25) anliegt.

6. Kreuzkontaminationsfreies Fluidschaltventil gemäß Anspruch 1, **dadurch gekennzeichnet, dass** die Schaltöffnungen (211) gleichmäßig entlang eines Umfangs des Ventilkopfs (21) verteilt sind, eine Mitte des Ventilkopfs (21) mit einer Zentralöffnung (212) entlang einer axialen Richtung des Ventilkopfs (21) für einströmendes Fluid versehen ist und die Zentralöffnung (212) mit dem Schlitz (231) in Kommunikationsverbindung steht.

7. Kreuzkontaminationsfreies Fluidschaltventil gemäß Anspruch 2, **dadurch gekennzeichnet, dass** der Ventilkörper (21) ferner eine Ventilbasis (27) umfasst, der Ventilkopf (21) an einem Ende der Ventilbasis (27), das auf dem Ventileinsatzsitz (22) ummantelt ist, angebracht ist und der Ventileinsatzsitz (22) relativ zu der Ventilbasis (27) drehbar ist.

8. Kreuzkontaminationsfreies Fluidschaltventil gemäß Anspruch 7, **dadurch gekennzeichnet, dass** der Ventilkörper (21) ferner ein Planlager (28) und ein elastisches Bauteil (29) umfasst, auf dem Ventileinsatzsitz (22) eine Anlagefläche ausgebildet ist, das Planlager (28) auf dem Ventileinsatzsitz (22) ummantelt ist, das elastische Bauteil (29) zwischen dem Planlager (28) und der Anlagefläche flexibel angeordnet ist und eine Endfläche des Planlagers (28) an einer Innenwand eines Endes der Ventilbasis (27) anliegt.

9. Kreuzkontaminationsfreies Fluidschaltventil gemäß Anspruch 2, **dadurch gekennzeichnet, dass** das kreuzkontaminationsfreie Fluidschaltventil ferner ein Gehäuse (10) umfasst, der Ventilkörper (20) an einem Ende des Gehäuses (10) angebracht ist und sowohl die erste Antriebsbaugruppe (30) als auch die zweite Antriebsbaugruppe (40) in dem Gehäuse (10) angebracht sind.

10. Kreuzkontaminationsfreies Fluidschaltventil gemäß Anspruch 9, **dadurch gekennzeichnet, dass** die erste Antriebsbaugruppe (30) einen ersten Antriebsmotor (31) und einen ersten Abbremsmechanismus (32), der erste Antriebsmotor (31) mit einem Leistungseingangsanschluss des ersten Abbremsmechanismus (32) verbunden ist, ein Leistungsausgangsanschluss des ersten Abbremsmechanismus (32) mit dem Ventileinsatzsitz (22) verbunden ist, die zweite Antriebsbaugruppe (40) einen zweiten Antriebsmotor (41) und einen zweiten Abbremsmechanismus (42), der zweite Antriebsmotor (41) mit einem Leistungsausgangsanschluss des zweiten Abbremsmechanismus (42) verbunden ist und der Leistungsausgangsanschluss des zweiten Abbremsmechanismus (42) durch die erste Antriebsbaugruppe (30) drehbar mit der Exzenterwelle verbunden ist.

## Revendications

1. Une soupape de commutation de fluide sans contamination croisée, **caractérisée en ce que** la soupape de commutation de fluide sans contamination croisée inclut un corps de soupape (20), un premier ensemble d'entraînement (30) et un deuxième ensemble d'entraînement (40), le corps de soupape (20) étant composé d'une tête de soupape (21), d'un siège de noyau de soupape (22) et d'un noyau de soupape rotor (23), le siège de noyau de soupape (22) étant apte à tourner par rapport à la tête de soupape (21), le noyau de soupape rotor (23) étant monté sur le siège de noyau de soupape (22) de manière coulissante, le siège de noyau de soupape (22) étant pourvu d'une goulotte coulissante (221), le noyau de soupape rotor (23) étant relié à la goulotte coulissante (221) de manière coulissante, une surface d'extrémité, éloignée de la tête de soupape (21), du noyau de soupape rotor (23) étant pourvue d'une gorge de guidage (232), une direction longitudinale de la gorge de guidage (232) étant perpendiculaire à une direction longitudinale du coulissement, le noyau de soupape rotor (23) étant ajusté avec la tête de soupape (21), laquelle est pourvue d'au moins trois orifices de commutation (211), le noyau de soupape rotor (23) étant pourvu d'une gorge (231), qui est apte à être en communication avec l'orifice (211) sur un plan d'ajustement entre le noyau de soupape rotor (23) et la tête de soupape (21), le premier ensemble d'entraînement (30) étant configuré pour entraîner le siège de noyau de soupape (22) à tourner, et le deuxième ensemble d'entraînement (40) étant configuré pour entraîner le noyau de soupape rotor (23) à coulisser.

2. La soupape de commutation de fluide sans contamination croisée de la revendication 1, **caractérisée en ce que** le corps de soupape (20) inclut en outre un arbre excentrique, qui est inséré dans le siège de noyau de soupape (22) de manière rotative, et une extrémité de l'arbre excentrique est accueillie dans la gorge de guidage (232) de manière mobile.

3. La soupape de commutation de fluide sans contamination croisée de la revendication 2, **caractérisée en ce que** l'arbre excentrique est un arbre d'entraînement (26) et une entretoise de liaison (261), qui fait saillie à partir d'une portion d'extrémité de l'arbre d'entraînement (26), un axe central de l'entretoise de liaison (261) est décalé par rapport à un axe central de l'arbre d'entraînement (26), un palier est monté sur l'entretoise de liaison (261), et le palier est accueilli dans la gorge de guidage (232).

4. La soupape de commutation de fluide sans contamination croisée de la revendication 2, **caractérisée en ce que** la direction longitudinale de la goulotte coulissante (221) est disposée le long d'une direction radiale du siège de noyau de soupape (22), une direction longitudinale de la gorge (231) est parallèle à la direction longitudinale de la goulotte coulissante (221), et la gorge (231) est disposée le long de la direction radiale du siège de noyau de soupape (22).

5. La soupape de commutation de fluide sans contamination croisée de la revendication 2, **caractérisée en ce que** le corps de soupape (20) inclut en outre un élément résistant à l'usure de rotor (25), qui est monté dans la goulotte coulissante (221) de manière coopérative, et le noyau de soupape rotor (23) vient en butée sur l'élément résistant à l'usure de rotor (25).

6. La soupape de commutation de fluide sans contamination croisée de la revendication 1, **caractérisée en ce que** les orifices de commutation (211) sont répartis uniformément le long d'une circonférence de la tête de soupape (21), un centre de la tête de soupape (21) est pourvu d'un orifice commun (212) le long d'une direction axiale de la tête de soupape (21) pour du fluide entrant, et l'orifice commun (212) est en communication avec la gorge (231).

7. La soupape de commutation de fluide sans contamination croisée de la revendication 2, **caractérisée en ce que** le corps de soupape (21) inclut en outre une base de soupape (27), la tête de soupape (21) est montée sur une extrémité de la base de soupape (27), qui est engainée sur le siège de noyau de soupape (22), et le siège de noyau de soupape (22) est apte à tourner par rapport à la base de soupape (27).

8. La soupape de commutation de fluide sans contamination croisée de la revendication 7, **caractérisée en ce que** le corps de soupape (21) inclut en outre un palier plan (28) et un composant élastique (29), une surface de butée est formée sur le siège de noyau de soupape (22), le palier plan (28) est engainé sur le siège de noyau de soupape (22), le composant élastique (29) est disposé entre le palier plan (28) et la surface de butée de manière flexible, et une surface d'extrémité du palier plan (28) vient en butée contre une paroi interne d'une extrémité de la base de soupape (27).

9. La soupape de commutation de fluide sans contamination croisée de la revendication 2, **caractérisée en ce que** la soupape de commutation de fluide sans contamination croisée inclut en outre un boîtier (10), le corps de soupape (20) est monté sur une extrémité du boîtier (10), et à la fois le premier ensemble d'entraînement (30) et le deuxième ensemble d'entraînement (40) sont montés dans le boîtier (10).

10. La soupape de commutation de fluide sans contamination croisée de la revendication 9, **caractérisée en ce que** le premier ensemble d'entraînement (30) comprend un premier moteur d'entraînement (31) et un premier mécanisme de décélération (32), le premier moteur d'entraînement (31) est relié à une borne d'entrée de puissance du premier mécanisme de décélération (32), une borne de sortie de puissance du premier mécanisme de décélération (32) est reliée au siège de noyau de soupape (22), le deuxième ensemble d'entraînement (40) comprend un deuxième moteur d'entraînement (41) et un deuxième mécanisme de décélération (42), le deuxième moteur d'entraînement (41) est relié à une borne de sortie de puissance du deuxième mécanisme de décélération (42), et la borne de sortie de puissance du deuxième mécanisme de décélération (42) est reliée de manière rotative à l'arbre excentrique par l'intermédiaire du premier ensemble d'entraînement (30).
